(19) **Europäisches Patentamt**

**European Patent Office**

**Office européen des brevets**

(11) **EP 1 241 664 B1**

(12) **EUROPEAN PATENT SPECIFICATION**

(45) Date of publication and mention
of the grant of the patent:
**30.08.2006 Bulletin 2006/35**

(51) Int Cl.:
*G10L 19/06* (2006.01)     *G10L 19/00* (2006.01)

(21) Application number: **02005778.2**

(22) Date of filing: **13.03.2002**

(54) **Voice encoding/decoding apparatus with packet error resistance and method thereof**

Vorrichtung zur Sprachcodierung und Sprachdecodierung mit Paketfehlerresistenz sowie Verfahren
dafür

Dispositif de codage/décodage de parole avec résistance aux erreurs de paquets et procédé associé

(84) Designated Contracting States:
**AT BE CH CY DE DK ES FI FR GB GR IE IT LI LU
MC NL PT SE TR**

(30) Priority: **13.03.2001 JP 2001069795**

(43) Date of publication of application:
**18.09.2002 Bulletin 2002/38**

(73) Proprietor: **NEC CORPORATION
Tokyo (JP)**

(72) Inventor: **Serizawa, Masahiro
Minato-ku,
Tokyo (JP)**

(74) Representative: **Betten & Resch
Patentanwälte
Postfach 10 02 51
80076 München (DE)**

(56) References cited:
**US-A- 5 875 292          US-A- 5 884 010**

• **KROON P ET AL: "Performance Of The Proposed
ITU-T 8 KB/S Speech Standard For A Rayleigh
Fading Channel" IEEE PROC. SPEECH
WORKSHOP, 20 September 1995 (1995-09-20),
pages 11-12, XP010269469**

EP 1 241 664 B1

**Description**

**BACKGROUND OF THE INVENTION**

The present invention relates to a voice decode apparatus in which the deterioration due to packet loss is reduced in voice packet communication using Voice over Internet Protocol (VoIP) or the like.

In packet type voice communication such as a Voice Over Internet Protocol (VoIP) system, in a transmitter, one or a plurality of voice frame data, which are obtained by encoding a voice signal at a block unit of 10 (msec) or the like, are gathered to make one packet, and after information such as generation time is added thereto, it is transmitted to a transmission line such as an internet. In the transmission line, the transmitted packet arrives at a receiver by way of a plurality of routers.

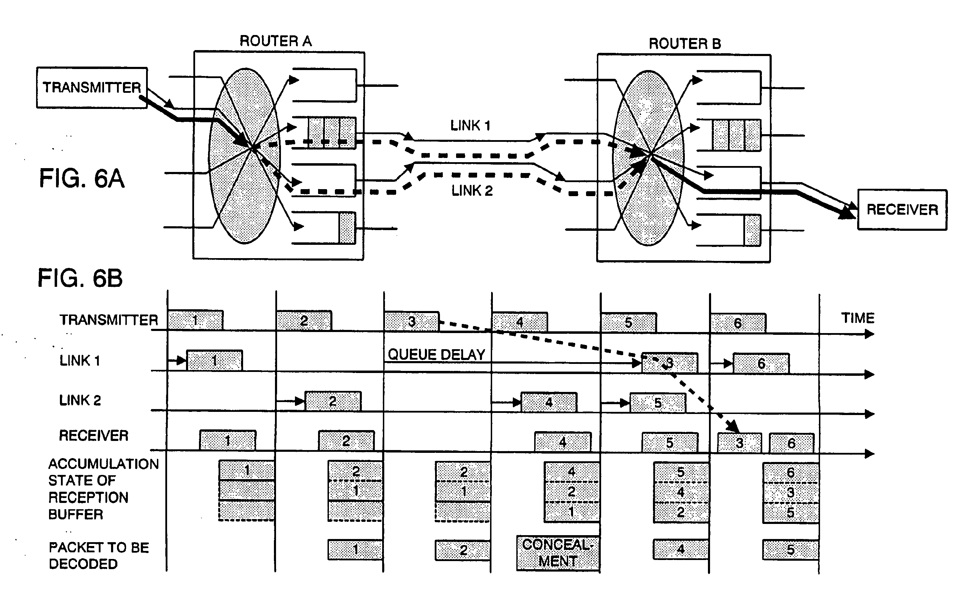

Here, using Fig. 6A and Fig. 6B, a flow of a packet in the transmission line will be explained. Fig. 6A represents processing, in which packets successively transmitted from the transmitter arrive at the receiver by way of a router A and a router B.

The router A and the router B are connected to each other by a plurality of links, and a buffer (queue) for adjusting the sending timing of a packet in accordance with a congestion degree of the links is provided.

Fig. 6B represents an example with respect to the sending timing at the transmitter and each queue and the reception timing at the receiver. The transmitter transmits the packets 1, 2, 3··· in that order for every certain time period. The packets transmitted from the transmitter are received by the receiver by way of either of the link 1 or the link 2. At this time, there is a case where the packets arrive at the receiver after being kept waiting for a long time at the queue since the links are congested due to packets for other systems. For instance, as shown in Fig. 6B, there are a case where the packet 3 is kept waiting for a long time in the link 1, and a case where the packet 3 is received after the packet 4 and the packet 5 are received by the receiver by way of the link 2. As a result, the receiver receives the packets 1, 2, 4, 5, 3 and 6 in that order. Usually, in the receiver, a reception buffer for accumulating a plurality of packets is prepared, and decode processing of voice is applied to a voice frame data first, which is included in not the packet received recently, but the packets received before that. Accordingly, the voice frame data to be decoded becomes available in case that the arrival of the packets is delayed or in case that an arrival order of the packets is replaced.

However, the packet, arrival of which has been delayed more than the length of the reception buffer, is discarded, since it is not in time for the voice decode processing in real time. With regard to the processing in this reception buffer, it is described in "Low delay real time voice communication system using additional adaptive control in LAN environment (Information Processing Society Magazine, Vol.40 No.7, pp. 3063-3073, July 1999)" (Literature 1). Also, with regard to concealment processing, it is described in "Performance of the proposed ITU-T 8kb/s speech coding standard for a rayleigh fading channel (IEEE Proc. Speech Coding Workshop, pp. 11-12, 1995" (Literature 2).

With regard to the processing of the reception buffer, a case where the length of the reception buffer is three packets, and the voice decode processing is conducted for every constant time period is shown in Fig. 6B, for example.

The reception buffer holds three packets received recently, and conducts the voice decode processing for every constant time period using the voice frame data included in the packets in the reception buffer. However, at the timing when a data of the packet 3 is decoded, since the packet 3 does not arrive at the reception buffer, the decode of the packet 3 is conducted by means of interpolation processing using the voice frame data received before that, which is called error concealment processing. Thereafter, the packet 3 is received, and however, since the voice decode processing corresponding to the packet 3 is already conducted, the packet 3 is discarded.

Next, a conventional voice encoding decode system will be explained.

As a voice encoding system being used most for a mobile phone or the like, there is a CELP (Code Excited Linear Prediction) system. With regard to this CELP system, it is described in "Code-Excited Linear Prediction: High Quality speech at Very Low Bit Rates (IEEE Proc. ICASSP-85, pp. 937-940, 1985)" (Literature 3). In an encoding apparatus adopting the CELP system, the encoding is conducted by extracting linear prediction (LP) coefficients representing a spectrum envelope characteristic obtained in a linear prediction analysis, and an excitation signal for driving an LP synthetic filter constructed of these LP coefficients from an input voice signal and encoding them.

The encoding of the LP analysis and the LP coefficients is conducted for every frame of predetermined length. The frame is further divided into sub-frames of predetermined length, and the encoding of the excitation signal is conducted for every sub-frame. Here, the excitation signal is constructed of a pitch component representing a pitch period of an input signal, a residual component other than that, and a gain of each component. The pitch component is represented by an adaptive code vector stored in a code book for holding the past excitation signal, which is called an adaptive code book. The above-described residual component is represented by a signal designed in advance, which is called a voice source code vector. For this signal, a multi-pulse signal consisting of a plurality pulses, and a random number signal or the like are used. The information of the voice source code vector is accumulated in a voice source code book. In a decode apparatus adopting the CELP system, an excitation signal calculated from the above-described decoded pitch component and the above-described decoded residual signal in input to the synthesis filter constructed of the above-described decoded LP coefficients to calculate a decoded voice signal.

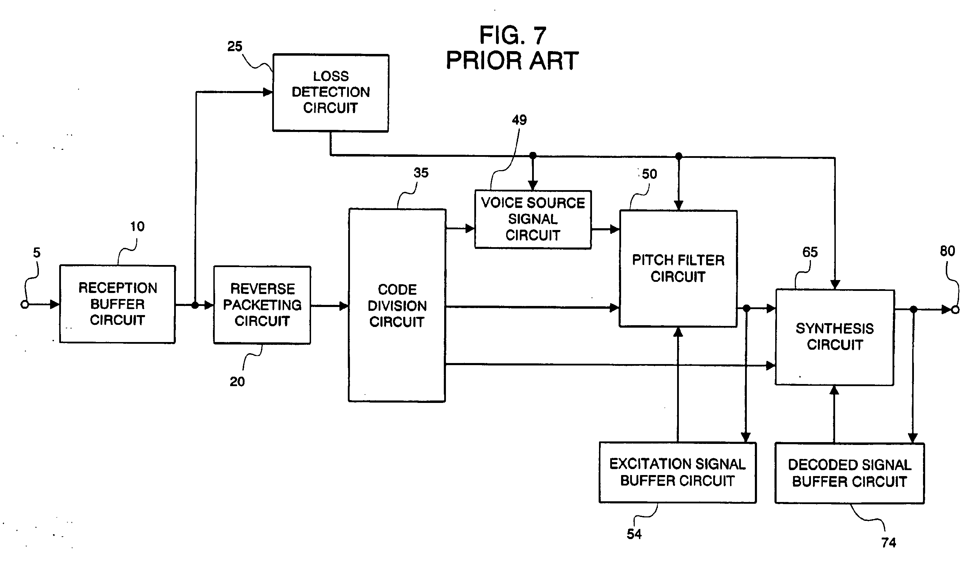

Next, using Fig. 7, a structure example of a decode apparatus adopting a conventional system will be explained. A packet is input to a packet input terminal 5 and is transferred to a reception buffer circuit 10. The reception buffer circuit 10 receives the packet from the packet input terminal 5, and accumulates predetermined N latest packets. Assuming that the number of voice frame data included in one packet is M, and frame length is L (msec), a communication delay time period due to the reception buffer is N x M x L (msec). In the CELP system, L is about between 10 and 30 (msec), and M x N is set about between 2 and 10 in accordance with a delay time period allowed by a communication system to be developed. The accumulated packets are rearranged in order of generation time, and are successively transferred to a loss detection circuit 25 and a code division circuit 35.

The loss detection circuit 25 determines whether or not packet loss exists by using the generation time attached to the packets successively transferred from the reception buffer circuit 10. In case that the generation time is behind time when the packet should be decoded, it is regarded as the loss of the packet. The voice decode processing with respect to the packet that is considered to be lost is conducted using the information extracted from the packets received before that. Also, a result of the determination on whether or not the packet loss exists is transferred to a voice source signal circuit 49, a pitch filter circuit 50 and a synthesis circuit 65. A reverse packeting circuit 20 extracts a voice frame data from the packets transferred from the reception buffer circuit 10, and transfers it to the code division circuit 35.

The code division circuit 35 transfers a code of a voice source signal, a code of a pitch filter and a code of a synthesis filter which are obtained by dividing the voice frame data transferred from the reverse packeting circuit 20 to the voice source signal circuit 49, the pitch filter circuit 50 and the synthesis circuit 65, respectively.

The voice source signal circuit 49 decodes a voice source code vector Cr and a voice source gain gr from the codes transferred from the code division circuit 35, and calculates a voice source signal Er = gr Cr, and transfers it to the pitch filter circuit 50. The voice source gain gr is scalar-quantized, and in a quantization table designed in advance, a value corresponding to the transferred codes is assumed to be a decoded value. With regard to the voice source code vector Cr, in the voice source code book prepared in advance, a vector corresponding to the transferred codes is assumed to be a decoded vector. Also, in case that the determination result transferred from the loss detection circuit 25 shows that the packet loss exists, the voice source gain and the voice source code vector are created by repeatedly using the voice frame data transferred just before from the code division circuit 35. A random number signal can be substituted for the voice source code vector. An unusual deterioration can be avoided by using the voice source gain after it is reduced by several dB.

The pitch filter circuit 50 and an excitation signal buffer circuit 54 constitute a filter having the feedback for making an output recur, and in the excitation signal buffer circuit 54, an excitation signal that is a memory value of the filter is accumulated.

The pitch filter circuit 50 decodes a pitch period L and a pitch gain ga from the codes transferred from the code division circuit 35. The pitch period and the pitch gain are scalar-quantized, respectively, and in quantization tables designed in advance, respectively, values corresponding to the transferred codes are assumed to be coded values. Also, an adaptive code vector Ca is created by going back to the past by L and cutting the past excitation signals transferred from the excitation signal buffer circuit 54. Further, a pitch component signal Ea = ga Ca is calculated. Finally, an excitation signal E = Ea + Er is calculated from a voice source signal Er transferred from the voice source signal circuit 49 and the pitch component signal Ea, and is transferred to the synthesis circuit 65 and the excitation signal buffer circuit 54. In case that the determination result transferred from the loss detection circuit 25 shows that the packet loss exists, the pitch period and the pitch gain are created by repeatedly using the voice frame data transferred just before from the code division circuit 35. An allophone can be avoided by using the pitch gain after it is reduced by several dB.

The excitation signal buffer circuit 54 accumulates the excitation signal E transferred from the pitch filter circuit 50 until a predetermined time period in the past, and transfers the accumulated excitation signal to the pitch filter circuit 50.

The synthesis circuit 65 and a decoded signal buffer circuit 74 constitute a filter having the feedback for making an output recur, and in the decoded signal buffer circuit 74, a decoded signal that is a memory value of the filter is accumulated.

The synthesis circuit 65 decodes LP coefficients a(i), i=1, ···, p, which represent a spectrum characteristic, using the codes transferred from the code division circuit 35. Here, p is an order of the LP coefficients. In case that the determination result transferred from the loss detection circuit 25 shows that the packet loss exists, the LP coefficients are created by repeatedly using the voice frame data transferred just before from the code division circuit 35. As an encoding and decoding method of the LP coefficients, there is a method in which, after being changed to line spectral pairs (LSP), the LP coefficients are vector-quantized. With regard to the detail of a vector quantization method of the LSP, "Efficient Vector Quantization of LPC Parameters at 24 Bits/Frame (IEEE Proc. ICASSP-91, pp. 661-664, 1991)" (Literature 4) can be referred to. Also, the synthesis circuit 65 calculates a decoded signal by filtering the excitation signal E transferred from the pitch filter circuit 50 by means of the next synthesis filter H(z) constructed of the LP coefficients a(i), i=1, ···, p, using the past decoded signals accumulated in the decoded signal buffer circuit 74, and transfers it to a decoded voice output terminal 80 and the decoded signal buffer circuit 74.

$$H(z) = \frac{1}{1 + \sum_{i=1}^{p} a(i)z^{-i}} \qquad (1)$$

By using the filter of the equation (1), decoded signal time series x(t) are calculated from excitation signal time series e(t) in accordance with the following equation:

$$x(t) = e(t) + \sum_{i=1}^{p} a(i)x(t-i) \qquad (2)$$

In the calculation of the equation (2), since the past decoded signal time series x(t-i), i=1, ⋯ , p, are used for filter memory values, it is necessary to accumulate the past decoded signals. For that, the decoded signal buffer circuit 74 transfers the decoded signals accumulated only at p time in the past, out of the decoded signals transferred from the synthesis circuit 65, to the synthesis circuit 65. The decoded voice output terminal 80 outputs the decoded voice transferred from the synthesis circuit 65.

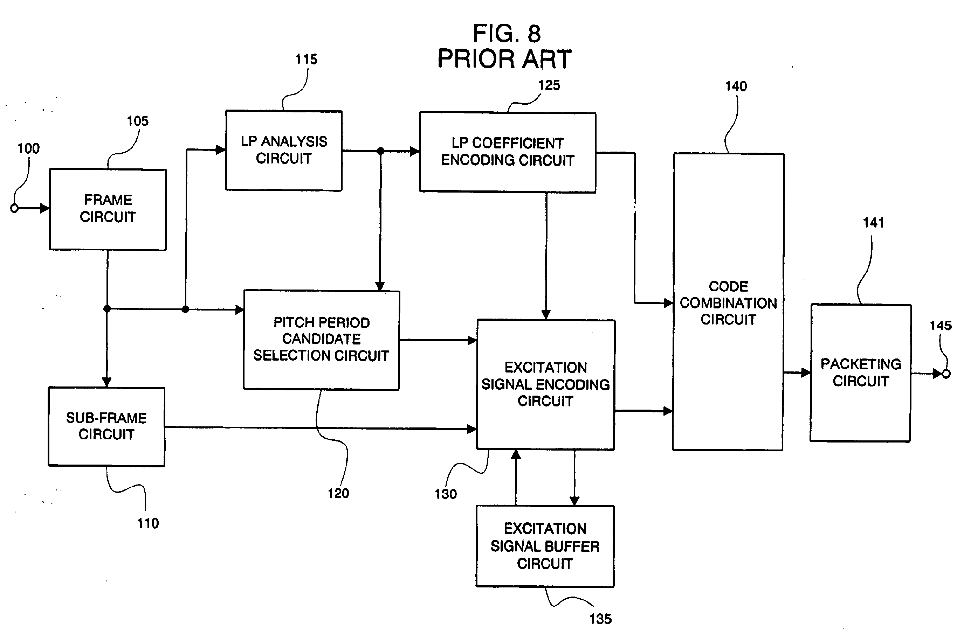

In the CELP system, by applying a filter for enhancing a spectrum peak, which is called a post filter, to the decoded signals output from the synthesis circuit 65, it is possible to improve auditory voice quality of the decoded signals. Next, a conventional decode apparatus or a conventional example of a voice encoding apparatus for generating a packet to be decoded in a decode apparatus of the present invention will be explained using Fig. 8.

A voice signal is input to a voice input terminal 100, and is transferred to a frame circuit 105. The frame circuit 105 cuts decoded signals transferred from the voice input terminal 100 by predetermined frame length, and transfers them to an LP analysis circuit 115, a pitch period candidate selection circuit 120 and a sub-frame circuit 110. The sub-frame circuit 110 divides the signal transferred from the frame circuit 105 into predetermined sub-frame length, and transfers it to an excitation signal encoding circuit 130. The LP analysis circuit 115 conducts an LP analysis of the signal transferred from the frame circuit 105 to obtain LP coefficients. Next, these LP coefficients are transferred to an LP coefficient encoding circuit 125 and the pitch period candidate selection circuit 120.

The LP coefficient encoding circuit 125 applies vector-quantization to the LP coefficients transferred from the LP analysis circuit 115, and transfers the codes thereof to a code combination circuit 140. For the quantization method of the LP coefficients, the Literature (4) can be referred to. Further, the quantized LP coefficients are transferred to the excitation signal encoding circuit 130.

The pitch period candidate selection circuit 120 selects a candidate of a pitch period by using the decoded signals transferred from the frame circuit 105, and transfers it to the excitation signal encoding circuit 130. In the candidate selection, first, the signal transferred from the frame circuit 105 is filtered by means of the following weighting filter W(z) constructed of the LP coefficients a(i), i=1, ⋯, p, transferred from the LP analysis circuit 115:

$$W(z) = \frac{1 + \sum_{i=1}^{p} \beta^{i} a(i)z^{-i}}{1 + \sum_{j=1}^{p} \gamma^{j} a(j)z^{-j}} \qquad (3)$$

Here, β and γ are coefficients for adjusting a weighting degree for improving auditory voice quality, and take values which meet $0 < \gamma < \beta \leq 1$. Next, an auto-correlation function of these weighted decoded signals is calculated in a range between 20 and 147 of a correlation lag, and the correlation lag at which the auto-correlation becomes a maximum, and values adjacent thereto are set as the candidates of the pitch period. The excitation signal encoding circuit 130 encodes an excited component of a signal vector Sd of the sub-frame length, for every sub-frame, which was transferred from the sub-frame circuit 110, and transfers the code thereof to the code combination circuit 140. First, an adaptive code vector is created by going back to the past by a time period L and cutting the excitation signals decoded in the past by the sub-frame length, which were transferred from the excitation signal buffer circuit 135. Next, filtering is applied to this adaptive code vector by means of the equation (1), and a decoded signal Sa (L) having only a pitch component is calculated. Next, the decoded signal vector Sd and the pitch component vector Sa (L) are weighted by using the equation (3), respectively, to obtain a weighted decode signal vector Sdw and a weighted pitch component vector Saw (L). The above operation for the pitch component is applied to each candidate of the pitch period, which is transferred from the pitch period candidate selection circuit 120, and an optimum pitch period Lo is determined so that a square distance of the weighted decode signal vector Sdw and the weighted pitch component vector Saw (L)

$$\mathrm{Da} = \left\| \mathrm{Sdw} - \mathrm{ga}\,(\mathrm{L}) \cdot \mathrm{Saw}\,(\mathrm{L}) \right\| \qquad (4)$$

becomes a minimum. Here, ga (L) is an optimum pitch gain calculated for every pitch period L.

$$\mathrm{ga}(\mathrm{L}) = \left\langle \mathrm{Sdw}, \mathrm{Saw}\,(\mathrm{L}) \right\rangle \diagup \left\| \mathrm{Saw}\,(\mathrm{L}) \right\| \qquad (5)$$

Here,
$\|x\|$
and
$\langle x,y \rangle$
mean a norm of a vector x, and an inner product of a vector x and a vector y, respectively.

Next, codes obtained by applying scalar-quantization to Lo and ga (Lo) are transferred to the code combination circuit 140. Further, by subtracting a vector obtained by multiplying the weighted pitch component vector Saw (Lo) by a quantized optimum pitch gain gaq (Lo) from the weighted decode signal vector Sdw, a residual signal vector Sdw' is obtained. Further, the k-th accumulated voice source vector Cr (k) is taken out from the voice source code book designed in advance. Next, filtering is applied to this voice source code vector by means of the equation (1), and a decoded signal Sr (k) having only a residual component is calculated. Further, the decoded signal vector Sd and the residual component vector Sr (k) are weighted, respectively, by using the equation (3) to obtain the weighted decode signal vector Sdw and a weighted residual component vector Srw (k). The above operation for the residual component is applied to all voice source code vectors accumulated in the voice source code book, and a code ko of the voice source code vector is determined so that a square distance of the residual signal vector Sdw' and the weighted residual component vector Srw (k)

$$\mathrm{Dr} = \left\| \mathrm{Sdw'} - \mathrm{gr}\,(\mathrm{k}) \cdot \mathrm{Srw}\,(\mathrm{k}) \right\| \qquad (6)$$

becomes a minimum. Here, gr (k) is an optimum voice source gain calculated for every delay.

$$\mathrm{gr}(\mathrm{k}) = \left\langle \mathrm{Sdw}, \mathrm{Srw}\,(\mathrm{k}) \right\rangle \diagup \left\| \mathrm{Srw}\,(\mathrm{k}) \right\| \qquad (7)$$

Also, gr (ko) is scalar-quantized, and the code thereof and the code of the voice source code vector are transferred to the code combination circuit 140. Further, an excitation signal Ex = gaq (Lo) Ca (Lo) + grq (ko) Cr (ko) is calculated and transferred to the excitation signal buffer circuit 135. The excitation signal buffer circuit 135 accumulates the excitation signals Ex for a predetermined past period, which were transferred from the excitation signal encoding circuit 130, and transfers the accumulated excitation signals to the excitation signal encoding circuit 130.

The code combination circuit 140 gathers the LP coefficients, the codes with respect to the voice source component and the pitch component, which were transferred from the LP coefficient encoding circuit 125 and the excitation signal encoding circuit 130, and transfers them to a packeting circuit 141 as a voice frame data.

The packeting circuit 141 gathers the predetermined number of the voice frame data transferred from the code combination circuit 140, and generates a packet to which generation time or the like is added, and transfers it to a packet output terminal 40.

The packet transferred from the packeting circuit 141 is output from the packet output terminal 40.

However, in the above-mentioned prior art, since the filtering processing is conducted by using the filter memory values generated by the concealment processing, there is a task that voice quality of the decoded signal is deteriorated. The reason thereof is that the filter memory values are generated by using the concealment processing in the decoding of the packet for which it was determined that the packet was lost.

US-A-5,884,010 discloses a speech coding system robust to packet loss. In case of packet loss, vectors of an excitation signal are synthesized based on previously stored excitation signal vectors generated during non-missing packets. Specifically, the decoder generates and stores samples of a first excitation signal in a memory, and then, in response to a signal indicating a packet loss, the decoder synthesizes a second excitation signal based on the previously stored samples.

## SUMMARY OF THE INVENTION

Accordingly, the present invention was created in the light of the above-described task, and the objective thereof is to provide a voice decode apparatus, a voice encoding decode apparatus and a method thereof, in which the deterioration of voice quality of a decoded signal is reduced.

The present invention is defined in the independent claims. The dependent claims define embodiments of the invention.

In the present invention, in case that, due to a delay of arrival, a necessary packet cannot be received at time when it should be decoded, same as the conventional system, a decoded signal and a filter memory value are calculated at that time by using an appropriate signal by means of the concealment processing. However, in case that the packet can be received even though it is delayed, by using the packet, the filter memory value is recalculated for frames to be decoded from that time to the present. Accordingly, it becomes possible to remove an effect of the deterioration by the concealment processing in the filter memory value.

## BRIEF DESCRIPTION OF THE DRAWINGS

This and other objects, features and advantages of the present invention will become more apparent upon a reading of the following detailed description and drawings, in which:

Fig. 1 is a block diagram showing a structure example of a voice decode apparatus in a first embodiment,
Fig. 2 is a block diagram showing a structure example of a voice decode apparatus in a second embodiment,
Fig. 3 is a block diagram showing a structure example of a voice decode apparatus in a third embodiment,
Fig. 4 is a block diagram showing a structure example of a voice decode apparatus in a fourth embodiment,
Fig. 5 is a block diagram showing a structure example of a voice encoding apparatus corresponding to the voice decode apparatus of the present invention,
Fig. 6A and 6B are views explaining a flow of packets in a case where packet loss occurs.
Fig. 7 is a block diagram showing a structure example of a conventional voice encoding apparatus and
Fig. 8 is a block diagram showing a conventional voice decode apparatus.

## DESCRIPTION OF THE EMBODIMENTS

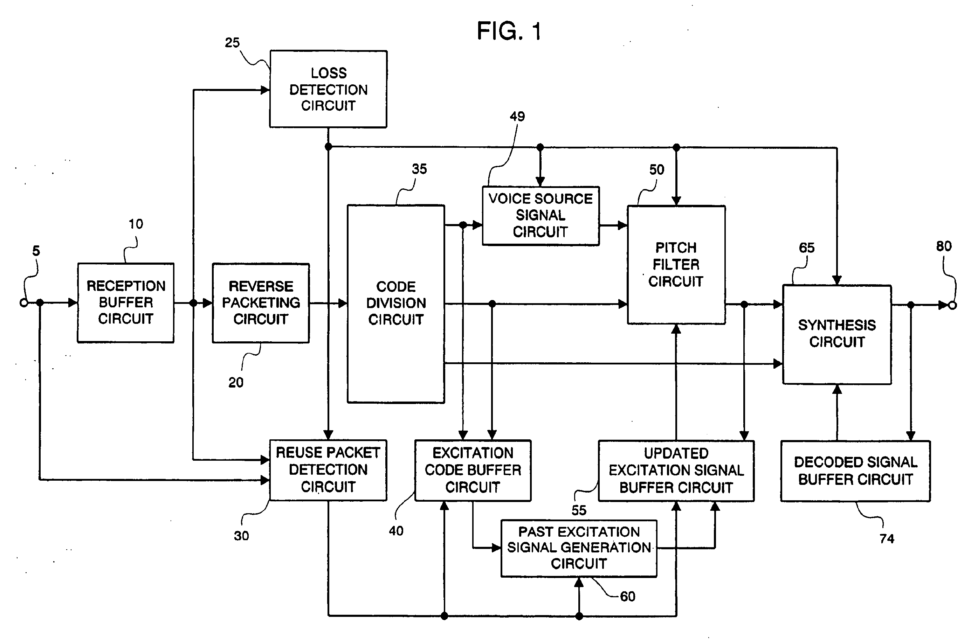

Embodiments of the present invention will be explained using Fig. 1 to Fig. 7.

Fig. 1 is a block diagram showing a structure of a voice decode apparatus in a first embodiment based on the present invention.

The first embodiment is characterized in that a past excitation signal that is a filter memory value to be used in a pitch filter is updated by using a voice frame data included in a packet that was received late.

The points different from the conventional apparatus are:

(1) to change circuits for receiving and transferring signals by means of a packet input terminal 5, a reception buffer circuit 10, a loss detection circuit 25, a code division circuit 35 and a pitch filter circuit 50;
(2) to add a reuse packet detection circuit 30, an excitation signal buffer circuit 40 and a past excitation signal generation circuit 50; and
(3) to change the excitation signal buffer circuit 54 to an updated excitation signal buffer circuit 55.

Therefore, only the explanations of these different circuits will be conducted.

A packet is input to the packet input terminal 5, and is transferred to the reception buffer circuit 10 and the reuse packet detection circuit 30.

The reception buffer circuit 10 receives the packet from the packet input terminal 5, and accumulates predetermined N updated packets. The accumulated packets are rearranged in order of generation time, and are successively transferred to the loss detection circuit 25, the reuse packet detection circuit 30 and the code division circuit 35.

The loss detection circuit 25 determines whether or not packet loss exists by using the generation time attached to the packets successively transferred from the reception buffer circuit 10. Also, a result of the determination is transferred to the voice source signal circuit 49, the pitch filter circuit 50, the synthesis circuit 65 and the reuse packet detection circuit 30.

The code division circuit 35 transfers a code of a voice source signal and a code of a pitch filter, which were obtained by dividing a voice frame data transferred from the reverse packeting circuit 20, to the voice source signal circuit 49 and the excitation code buffer circuit 40, and transfers a code of a synthesis filter to the synthesis circuit 65.

The pitch filter circuit 50 decodes a pitch period L and a pitch gain ga from the code transferred from the code division circuit 35, and generates an adaptive code vector Ca from the pitch period L and a excitation signal transferred from the updated excitation signal buffer circuit 55. Next, a pitch component signal Ea = ga Ca is calculated. Finally, from a voice source signal Er and a pitch component signal Ea transferred from the voice source signal circuit 49, an excitation signal E =Ea + Er is calculated, and is transferred to the synthesis circuit 65 and the updated excitation signal buffer circuit 55.

In case that the determination result transferred from the loss detection circuit 25 shows that frame loss exists, the reuse packet detection circuit 30 obtains the generation time of the loss packet from the packet transferred from the reception buffer circuit 10 and records it. Next, in case that the recorded generation time coincides with the generation time of the packet transferred from the packet input terminal 5, a command for recalculating excitation signals is transferred to the excitation code buffer circuit 40, the past excitation signal generation circuit 60 and the updated excitation signal buffer circuit 55, together with the generation time of the loss packet which arrived late.
The excitation code buffer circuit 40 accumulates the voice source signal and the codes of the pitch filter, which were transferred from the code division circuit 35, until the past for a time period corresponding to the predetermined number of packets. In order to use packets, which are received late, it is required that the number of these packets is longer than reception buffer length. Also, when receiving the recalculation command of the excitation signals from the reuse packet detection circuit 30, the excitation code buffer circuit 40 transfers the codes being accumulated after the transferred loss packet generation time to the past excitation signal generation circuit 60.

When receiving the recalculation command of the excitation signals from the reuse packet detection circuit 30, by using the codes of the excitation signals, which were transferred from the excitation code buffer circuit 40, the past excitation signal generation circuit 60 conducts the decode processing of the excitation signals up to a frame prior to a frame being presently processed from a retroactive frame, packet of which was lost. The decode processing is the same as one conducted by the voice source signal circuit 49, the pitch filter circuit 50 and the excitation signal buffer 54. In the frame in which this processing is conducted, with regard to the generation of the excitation signals, the quantity of operation becomes times as much as the frame number from the frame, packet of which was lost, to the frame being presently processed. The quantity of operation depends on the number of the packets, which are retroactively detected in the reuse packet detection. Finally, the excitation signals recalculated up to the prior frame are transferred to the updated excitation signal buffer circuit 55.

The updated excitation signal buffer circuit 55 accumulates the excitation signals E transferred from the pitch filter circuit 50 for a predetermined time period in the past, and transfers the accumulated excitation signals to the pitch filter circuit 50.

In case that the recalculation command of the excitation signals is transferred from the reuse packet detection circuit 30, after the excitation signals being already accumulated are replaced with the excitation signals recalculated by the past excitation signal generation circuit 60, these excitation signals are transferred to the pitch filter circuit 50.

Next, a second embodiment will be explained.

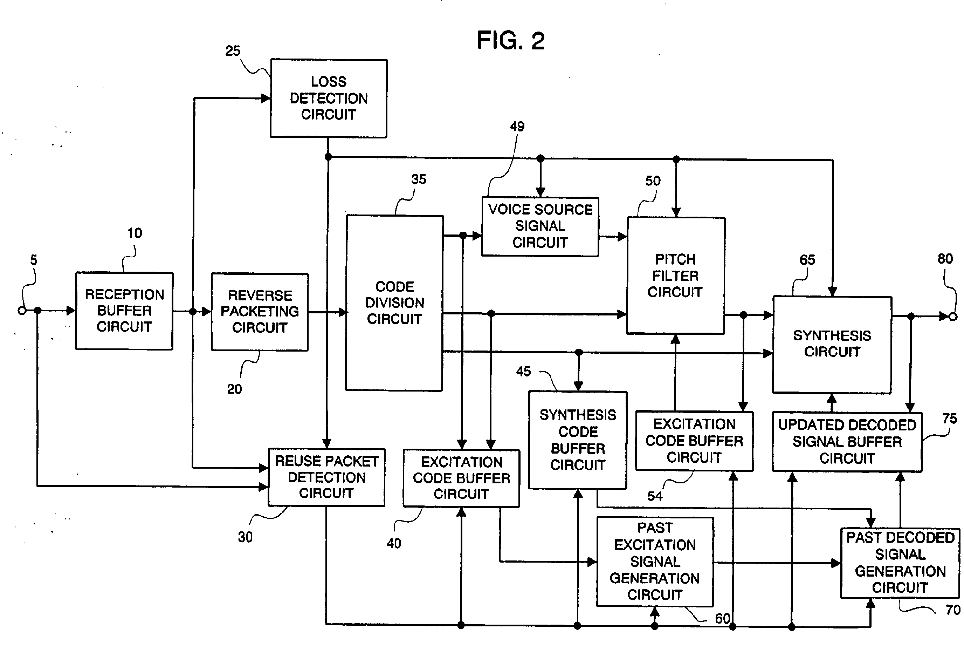

Fig. 2 is a block diagram showing a structure of a voice decode apparatus in the second embodiment based on the present invention.

The second embodiment is characterized in that a filter memory value to be used in a filter representing a spectrum envelope is updated by using a voice frame data included in a packet that was received late.

The points different from the first embodiment of the voice decoding apparatus are:

(1) to change circuits for receiving and transferring signals in the reuse packet detection circuit 30, the code division circuit 35, the pitch filter circuit 50 and the synthesis circuit 65;

(2) to change the updated excitation signal buffer circuit 55 to the excitation signal buffer circuit 54 being used in the conventional system, and the decoded signal buffer circuit 74 to the updated decoded signal buffer circuit 75, respectively; and

(3) to newly add a synthesis code buffer circuit 45 and a past decoded signal generation circuit 70.

Therefore, only the explanations of these circuits will be conducted.

A difference of the reuse packet detection circuit 30 in the second embodiment from the reuse packet detection circuit 30 in the first embodiment is that, in case that the packet transferred from the packet input terminal 5 coincides with the recorded generation time, the command for recalculating the excitation signals and the loss frame generation time are also transferred to the past decoded signal generation circuit 70 and the updated decoded signal buffer circuit 75 when being transferred from the packet input terminal 5.

A difference of the code division circuit 35 in the second embodiment from the reuse packet detection circuit 30 in the first embodiment is that the codes of the synthesis filter are also transferred to the synthesis code buffer circuit 45.

A difference of the pitch filter circuit 50 in the second embodiment from the pitch filter circuit 60 in the first embodiment is that the transfer and reception of the excitation signals are conducted to and from the excitation signal buffer circuit 54, not to and from the updated excitation signal buffer 55.

A difference of the synthesis circuit 65 in the second embodiment from the synthesis circuit 65 in the first embodiment is that the transfer and reception of the decoded signals are conducted to and from the updated decoded signal buffer circuit 75, not to and from the decoded signal buffer circuit 74.

The excitation signal buffer circuit 54 accumulates the excitation signals E transferred from the pitch filter circuit 50 until the past for a predetermined time period, and transfers the accumulated excitation signals to the pitch filter circuit 50.

The synthesis code buffer circuit 45 accumulates the codes of the LP coefficients representing a spectrum envelope transferred from the code division circuit 35 until the past for a time period corresponding to a predetermined number of packets. In order to use packets, which are received late, it is required that the number of these packets is longer than reception buffer length. Also, when a recalculation command of the LP filter codes is received from the reuse packet detection circuit 30, the codes accumulated after the generation time of the transferred loss packet are transferred to the past decoded signal generation circuit 70.

When receiving the recalculation command of the excitation signals from the reuse packet detection circuit 30, by using the codes of the LP coefficients, which were transferred from the synthesis code buffer circuit 45, and the excitation signals transferred from the past excitation signal generation circuit 60, the past decoded signal generation circuit 70 conducts the decode processing up to a frame prior to a frame being presently processed from a retroactive frame included in the loss packet. The decode processing is the same as one conducted in the synthesis circuit 65. In the frame in which this processing is conducted, with regard to the generation of the excitation signals, the quantity of operation becomes times as much as the frame number from the frame corresponding to the loss packet to the frame being presently processed. The quantity of operation depends on the number of the packets which are retroactively detected in the reuse packet detection. Finally, the decoded signals recalculated up to the prior frame are transferred to the updated decoded signal buffer circuit 75.

The updated decoded signal buffer circuit 75 accumulates the decoded signals transferred from the synthesis circuit 65, and transfers the decoded signals accumulated at p time in the past to the synthesis circuit 65. In case that the recalculation command of the decoded signals is transferred from the reuse packet detection circuit 30, after the decoded signals being already accumulated are replaced with the decoded signals recalculated by the past decoded signal generation circuit 70, these decoded signals are transferred to the synthesis circuit 65.

Next, a third embodiment will be explained.

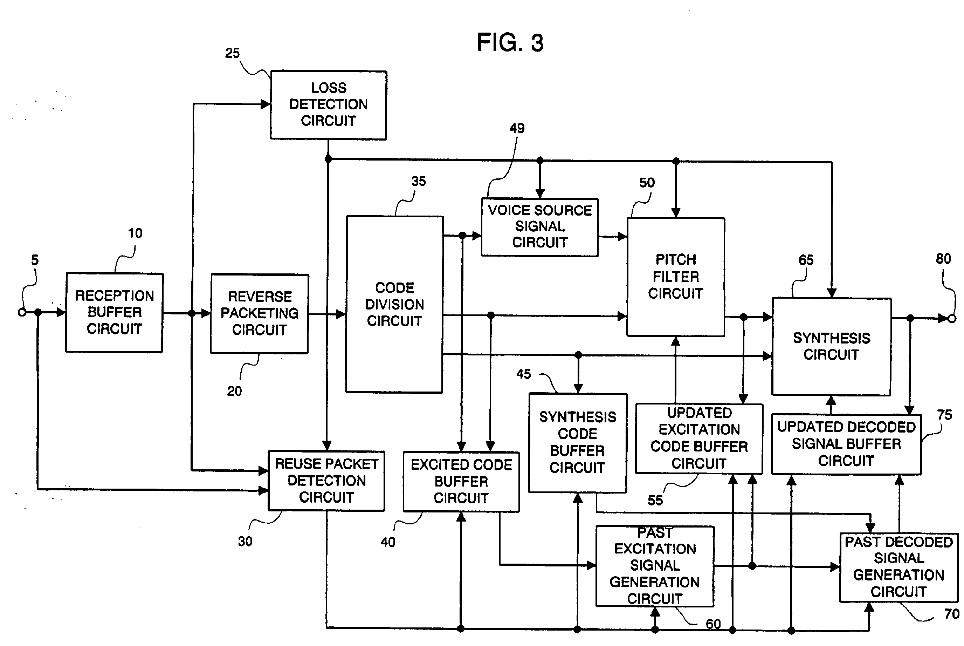

Fig. 3 is a block diagram showing a structure of a voice decode apparatus in the third embodiment based on the present invention.

The third embodiment is characterized in that both a filter memory value to be used in a filter representing a pitch and a filter memory value to be used in a filter representing a spectrum envelope are updated by using a voice frame data included in a packet that was received late. In other words, it is an embodiment in which the first embodiment and the second embodiment are combined with each other.

Therefore, the explanations of these circuits will be omitted.

A fourth embodiment will be explained.

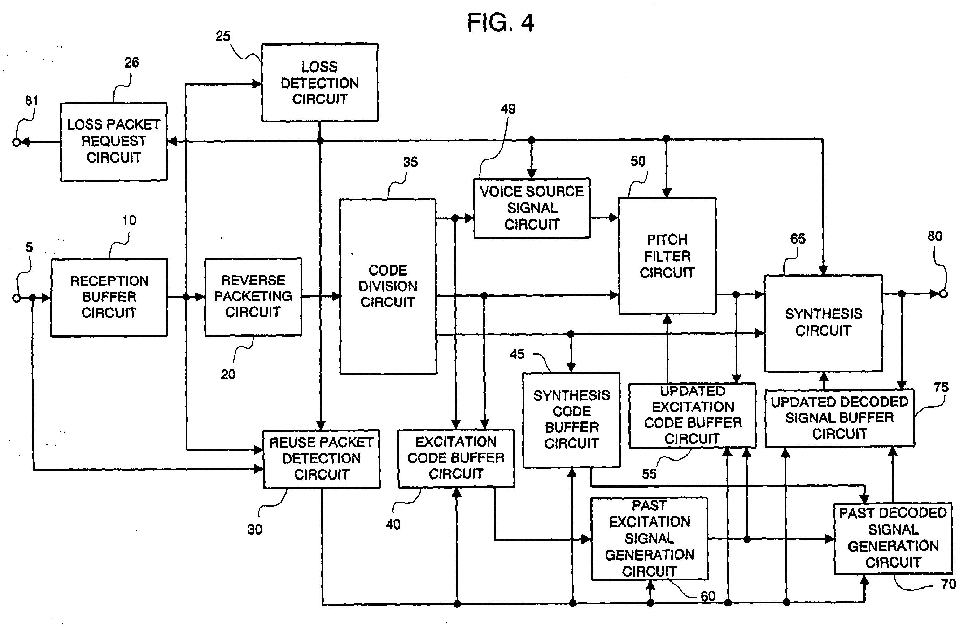

Fig. 4 is a block diagram showing a structure of a voice decode apparatus in the fourth embodiment based on the present invention.

The fourth embodiment is characterized in that, in the above-mentioned first, second or third embodiment, means for outputting a signal for requesting the resending of a packet which was lost in case that packet loss occurs is provided.

The different points of the fourth embodiment from the voice decode apparatus of the third embodiment are:

(1) to also transfer a determination result generated by the loss detection circuit 25 to a loss packet request circuit 26; and
(2) to newly add the loss packet request circuit 26.

Therefore, only these circuits will be explained.

A difference of the loss detection circuit 25 in the fourth embodiment from the loss detection circuit in the third embodiment is that the determination result of the loss packet is also transferred to the loss packet request circuit 26. When the determination result transferred from the loss detection circuit 25 shows the packet loss, the loss packet request circuit 26 transfers a resending request of the packet which was lost to a loss packet request output terminal 81.

A fifth embodiment will be explained.

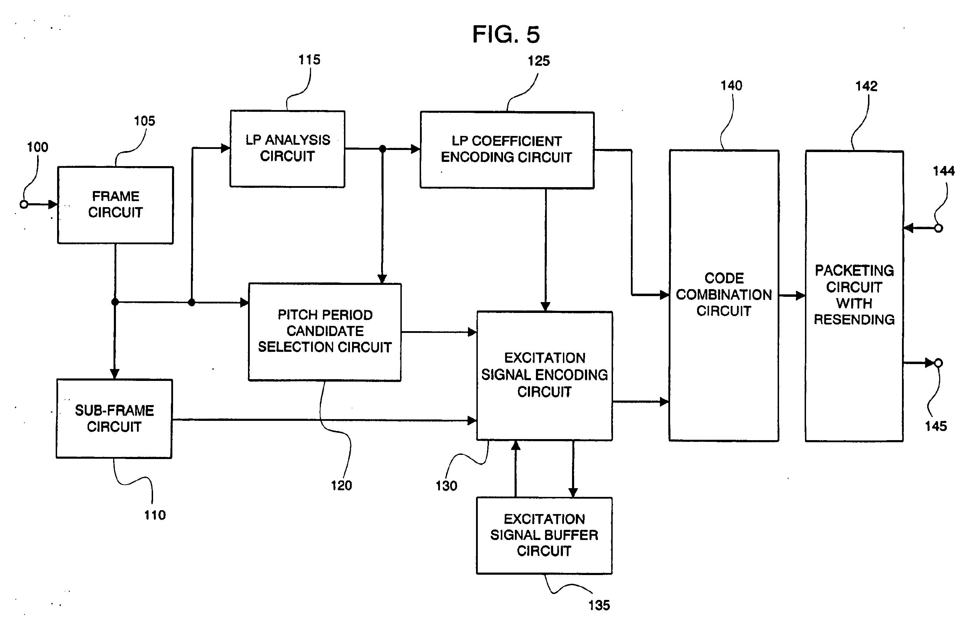

Fig. 5 is a block diagram showing a structure of a voice encoding apparatus in the fifth embodiment based on the present invention.

The fifth embodiment relates to a voice encoding apparatus in which a loss packet request output from the voice decode apparatus in accordance with the fourth embodiment is received, and a corresponding packet is resent.

The different points of the voice encoding apparatus of the fifth embodiment from the voice encoding apparatus of the conventional system are:

(1) to change circuits for transferring and receiving signals to and from a packet output terminal 145 and a code combination circuit 140;
(2) to replace the packeting circuit 141 with a packeting circuit 142 with resending; and
(3) to newly add a loss packet request input terminal 144.

Therefore, only these circuits will be explained.

A difference of the code combination circuit 140 of the fifth embodiment from the conventional system is that combined codes are transferred to the packeting circuit with resending 142, not to the packeting circuit 141.

The loss packet request input terminal 144 receives a loss packet request, and transfers it to the packeting circuit 142 with resending.

The packeting circuit 142 with resending gathers the predetermined number of the voice frame data transferred from the code combination circuit 140, and generates packets to which generation time or the like is added, and transfers them to the packet output terminal 40. Also, the above-described packets are accumulated until the predetermined past. Further, when the loss packet request is transferred from the loss packet request input terminal 144, the requested packet is taken out from the above-described accumulated packets, and is transferred to the packet output terminal 145.

The packet transferred from the packeting circuit 142 with resending is output from the packet output terminal 145.

In accordance with the present invention, after the reception of a packet on which packet loss is determined due to the reception later than the reception buffer length, since the filter memory value which is not affected by the loss of the packet is used for the calculation, an excellent advantage that the voice quality deterioration of the decoded signals can be reduced is effected. The reason thereof is that the filter memory value is generated by the decode processing using the received packet, not by the concealment processing.

An embodiment of the invention can be summarized as follows.

In case that a determination result transferred from a loss detection circuit 25 shows that frame loss exists, a reuse packet detection circuit 30 obtains the generation time of loss packet from the packet transferred from a reception buffer circuit 10 and records it. Next, in case that the recorded generation time coincides with the generation time of the packet transferred from a packet input terminal 5, a command for recalculating excitation signals is transferred to an excitation code buffer circuit 40, a past excitation signal generation circuit 60 and an updated excitation signal buffer circuit 55, together with the generation time of the loss packet which arrived late. The excitation code buffer circuit 40 accumulates the voice source signal and the codes of a pitch filter, which were transferred from a code division circuit 35, until the past for a time period corresponding to the predetermined number of packets. In order to use packets which are received late, it is required that the number of these packets is longer than reception buffer length. Also, when receiving the recalculation command of the excitation signals from the reuse packet detection circuit 30, the excitation code buffer circuit 40 transfers the codes being accumulated after the transferred loss packet generation time to a past excitation generation circuit 60. When receiving the recalculation command of the excitation signals from the reuse packet detection circuit 30, by using the codes of the excitation signals, which were transferred from the excitation code buffer circuit 40, the past excitation signal generation circuit 60 conducts the decode processing of the excitation signals up to a frame prior to a frame being presently processed from a retroactive frame, packet of which was lost. The decode processing is the same as one conducted by a voice source signal circuit 49, a pitch filter circuit 50 and an excitation signal buffer 54. In the frame in which this processing is conducted, with regard to the generation of the excitation signals, the quantity of operation becomes times as much as the frame number from the frame, packet of which was lost, to the frame being presently processed. The quantity of operation depends on the number of the packets which are retroactively detected in the reuse packet detection. Finally, the excitation signals recalculated up to the prior frame are transferred to an updated excitation signal buffer circuit 55. The updated excitation signal buffer circuit 55 accumulates the excitation signals B transferred from the pitch filter circuit 50 for a predetermined time period in the past, and transfers the accumulated excitation signals to the pitch filter circuit 50. In case that the recalculation command of the excitation signals is transferred from the reuse packet detection circuit 30, after the excitation signals being already accumulated are replaced with the excitation signals recalculated by the past excitation signal generation circuit 60, these excitation signals are transferred to the pitch filter circuit 50.

**Claims**

1. A voice decode apparatus having means (10) for receiving a packet, means (25) for determining whether or not said packet has been lost, means (50) for conducting first filtering processing using a pitch period decoded from said received packet, and means for conducting second filtering processing using a spectrum envelope decoded from said packet, said apparatus comprising:

   means (30) for detecting that the packet which has been determined to be lost at said determination means is delayed and received,
   means (40) for accumulating information in relation to said first filtering processing; and
   means (60) for re-calculating a filter memory value to be used for said first filtering processing when said reception of said lost packet is detected, using said information accumulated before that including said lost packet which was received with delay.

2. A voice decode apparatus recited in claim 1, further comprising means for requesting resending of the packet which has been lost in case that it has been determined to be lost at said determination means.

3. A voice code decoding/encoding apparatus comprising a voice decode apparatus according to claim 2, further comprising:

   means for resending a packet which has been lost in accordance with a request of the resending of packet.

4. A voice decode apparatus having means (10) for receiving a packet, means (25) for determining whether or not said packet has been lost, and means (65) for conducting filtering processing using a spectrum envelope decoded from said received packet, said apparatus comprising:

   means (30) for detecting that the packet which has been determined to be lost at said determination means is delayed and received,
   means (45) for accumulating information in relation to said filtering processing; and
   means (70) for re-calculating a filter memory value to be used for said filtering processing when said reception of said lost packet is detected, using said information accumulated before that including said lost packet which was received with delay.

5. A voice decode apparatus recited in claim 4, further comprising means for requesting resending of the packet which has been lost in case that it has been determined to be lost at said determination means.

6. A voice code decoding/encoding apparatus comprising a voice decode apparatus according to claim 5, further comprising

   means for resending a packet which has been lost in accordance with a request of the resending of packet.

7. A voice decode apparatus according to claim 1, further comprising (10)

   means (45) for accumulating second information in relation to said second filtering processing;
   means for (70) re-calculating a filter memory value to be used for said second filtering processing when said reception of said lost packet is detected, using said second information accumulated before that including said lost packet which was received with delay.

8. A voice decode apparatus recited in claim 7, further comprising means for requesting resending of the packet which has been lost in case that it has been determined to be lost at said determination means.

9. A voice code decoding/encoding apparatus comprising a voice decode apparatus according to claim 8, further comprising:

means for resending a packet which has been lost in accordance with a request of the resending of packet.

10. A voice decoding method having a step of receiving a packet, a step of determining whether or not said packet has been lost, a step of conducting first filtering processing using a pitch period decoded from said received packet, and a step of conducting second filtering processing using a spectrum envelope decoded from said packet, said method comprising:

a step of detecting that the packet which has been determined to be lost at said determination step is delayed and received,
a step of accumulating information in relation to said first filtering processing; and
a step of re-calculating a filter memory value to be used for said first filtering processing when said reception of said lost packet is detected, using said information accumulated before that including said lost packet which was received with delay.

11. A voice decoding method recited in claim 10, further comprising a step of requesting resending of the packet which has been lost in case that it has been determined to be lost at said determination means.

12. A voice encoding/decoding method comprising the method steps according to claim 11, further comprising:

a step of resending a packet which has been lost in accordance with a request of the resending of said packet.

13. A voice decoding method having a step of receiving a packet, a step of determining whether or not said packet has been lost, and a step of conducting filtering processing using a spectrum envelope decoded from said packet, said method comprising:

a step of detecting that the packet which has been determined to be lost at said determination step is delayed and received,
a step of accumulating information in relation to said filtering processing; and
a step of re-calculating a filter memory value to be used for said filtering processing when said reception of said lost packet is detected, using said information accumulated before that including said lost packet which was received with delay.

14. A voice decoding method recited in claim 13, further comprising a step of requesting resending of the packet which has been lost in case that it has been determined to be lost at said determination means.

15. A voice encoding/decoding method comprising the method steps according to claim 14, further comprising:

a step of resending a packet which has been lost in accordance with a request of the resending of said packet.

16. A voice decoding method as claimed in claim 10, further comprising

a step of accumulating second information in relation to said second filtering processing;
a step of re-calculating a filter memory value to be used for said second filtering processing when said reception of said lost packet is detected, using said second information accumulated before that including said lost packet which was received with delay.

17. A voice decoding method recited in claim 16, further comprising a step of requesting resending of the packet which has been lost in case that it has been determined to be lost at said determination means.

**18.** A voice encoding/decoding method comprising the method steps according to claim 17, further comprising:

a step of resending a packet which has been lost in accordance with a request of the resending of said packet.

## Patentansprüche

**1.** Sprachdecodierungsvorrichtung mit einer Einrichtung (10) zum Empfangen eines Pakets, einer Einrichtung (25) zum Bestimmen, ob das Paket verloren gegangen ist oder nicht, einer Einrichtung (50) zum Ausführen einer ersten Filterungsverarbeitung unter Verwendung einer Tonhöhe, die aus dem empfangenen Paket decodiert wird, und einer Einrichtung zum Ausführen einer zweiten Filterungsverarbeitung unter Verwendung einer Spektrumseinhüllenden, die aus dem Paket decodiert wird, wobei die Vorrichtung umfasst:

eine Einrichtung (30) zum Erfassen, dass das Paket, für das in der Bestimmungseinrichtung festgestellt worden ist, dass es verloren gegangen ist, verzögert ist und empfangen wird,
eine Einrichtung (40) zum Akkumulieren von Informationen in Bezug auf die erste Filterungsverarbeitung; und
eine Einrichtung (60) zum erneuten Berechnen eines Filterspeicherwerts, der in der ersten Filterungsverarbeitung zu verwenden ist, wenn der Empfang des verloren gegangenen Pakets erfasst wird, wobei diese Informationen verwendet werden, die vor jenen akkumuliert werden, die das verloren gegangene Paket enthalten, das mit Verzögerung empfangen wurde.

**2.** Sprachdecodierungsvorrichtung nach Anspruch 1, die ferner eine Einrichtung zum Anfordern eines erneuten Sendens des verloren gegangenen Pakets, falls in der Bestimmungseinrichtung festgestellt worden ist, dass es verloren gegangen ist, umfasst.

**3.** Sprachcode-Decodierungs-/Codierungs-Vorrichtung, die eine Sprachdecodierungsvorrichtung nach Anspruch 2 umfasst und ferner umfasst:

eine Einrichtung zum erneuten Senden eines verloren gegangenen Pakets in Übereinstimmung mit einer Anforderung zum erneuten Senden des Pakets.

**4.** Sprachdecodierungsvorrichtung, mit einer Einrichtung (10) zum Empfangen eines Pakets, einer Einrichtung (25) zum Bestimmen, ob das Paket verloren gegangen ist oder nicht, und einer Einrichtung (65) zum Ausführen einer Filterungsverarbeitung unter Verwendung einer Spektrumseinhüllenden, die aus dem empfangenen Paket decodiert wird, wobei die Vorrichtung umfasst:

eine Einrichtung (30) zum Erfassen, dass das Paket, für das in der Bestimmungseinrichtung festgestellt worden ist, dass es verloren gegangen ist, verzögert ist und empfangen wird,
eine Einrichtung (45) zum Akkumulieren von Informationen in Bezug auf die Filterungsverarbeitung; und
eine Einrichtung (70) zum erneuten Berechnen eines Filterspeicherwerts, der für die Filterungsverarbeitung zu verwenden ist, wenn der Empfang des verloren gegangenen Pakets erfasst wird, wobei diese Informationen verwendet werden, die vor jenen akkumuliert werden, die das verloren gegangene Paket enthalten, das mit Verzögerung empfangen wurde.

**5.** Sprachdecodierungsvorrichtung nach Anspruch 4, die ferner eine Einrichtung zum Anfordern des erneuten Sendens des verloren gegangenen Pakets, falls in der Bestimmungseinrichtung festgestellt worden ist, dass es verloren gegangen ist, umfasst.

**6.** Sprachcode-Decodierungs-/Codierungs-Vorrichtung, die eine Sprachdecodierungsvorrichtung nach Anspruch 5 umfasst und ferner umfasst:

eine Einrichtung zum erneuten Senden eines verloren gegangenen Pakets in Übereinstimmung mit einer Anforderung zum erneuten Senden des Pakets.

**7.** Sprachdecodierungsvorrichtung nach Anspruch 1, die ferner umfasst:

eine Einrichtung (45) zum Akkumulieren zweiter Informationen in Bezug auf die zweite Filterungsverarbeitung;
eine Einrichtung (70) zum erneuten Berechnen eines Filterspeicherwerts, der für die zweite Filterungsverarbeitung zu verwenden ist, wenn der Empfang des verloren gegangenen Pakets erfasst wird, wobei diese zweiten Informationen werden, die vor jenen akkumuliert wurden, die das verloren gegangene Paket enthalten, das mit Verzögerung empfangen wurde.

**8.** Sprachdecodierungsvorrichtung nach Anspruch 7, die ferner eine Einrichtung zum Anfordern des erneuten Sendens des verloren gegangenen Pakets, falls in der Bestimmungseinrichtung festgestellt worden ist, dass es verloren gegangen ist, umfasst.

**9.** Sprachcode-Decodierungs-/Codierungs-Vorrichtung, die eine Sprachdecodierungsvorrichtung nach Anspruch 8 umfasst und ferner umfasst:

eine Einrichtung zum erneuten Senden eines verloren gegangenen Pakets in Übereinstimmung mit einer Anforderung zum erneuten Senden des Pakets.

**10.** Sprachdecodierungsverfahren, das einen Schritt des Empfangens eines Pakets, einen Schritt des Bestimmens, ob das Paket verloren gegangen ist oder nicht, einen Schritt des Ausführens einer ersten Filterungsverarbeitung unter Verwendung einer Tonhöhe, die aus dem empfangenen Paket decodiert wird, und einen Schritt des Ausführens einer zweiten Filterungsverarbeitung unter Verwendung einer Spektrumseinhüllenden, die aus dem Paket decodiert wird, umfasst, wobei das Verfahren ferner umfasst:

einen Schritt des Erfassens, dass das Paket, für das in dem Bestimmungsschritt festgestellt worden ist, dass es verloren gegangen ist, verzögert ist und empfangen wird,
einen Schritt des Akkumulierens von Informationen in Bezug auf die erste Filterungsverarbeitung; und
einen Schritt des erneuten Berechnens eines Filterspeicherwerts, der in der ersten Filterungsverarbeitung zu verwenden ist, wenn der Empfang des verloren gegangenen Pakets erfasst wird, wobei diese Informationen verwendet werden, die vor jenen akkumuliert werden, die das verloren gegangene Paket enthalten, das mit Verzögerung empfangen wurde.

**11.** Sprachdecodierungsverfahren nach Anspruch 10, das ferner einen Schritt des Anforderns eines erneuten Sendens des verloren gegangenen Pakets, falls in der Bestimmungseinrichtung festgestellt worden ist, dass es verloren gegangen ist, umfasst.

**12.** Sprachcodierungs-/Sprachdecodierungsverfahren, das die Verfahrensschritte nach Anspruch 11 umfasst und ferner umfasst:

einen Schritt des erneuten Sendens eines verloren gegangenen Pakets in Übereinstimmung mit einer Anforderung zum erneuten Senden des Pakets.

**13.** Sprachdecodierungsverfahren, das einen Schritt des Empfangens eines Pakets, einen Schritt des Bestimmens, ob das Paket verloren gegangen ist oder nicht, und einen Schritt des Ausführens einer Filterungsverarbeitung unter Verwendung einer Spektrumseinhüllenden, die aus dem Paket decodiert wird, umfasst, wobei das Verfahren ferner umfasst:

einen Schritt des Erfassens, dass das Paket, für das in dem Bestimmungsschritt festgestellt worden ist, dass es verloren gegangen ist, verzögert ist und empfangen wird,
einen Schritt des Akkumulierens von Informationen in Bezug auf die Filterungsverarbeitung; und
einen Schritt des erneuten Berechnens eines Filterspeicherwerts, der für die Filterungsverarbeitung zu verwenden ist, wenn der Empfang des verloren gegangenen Pakets erfasst wird, wobei diese Informationen verwendet werden, die vor jenen akkumuliert werden, die das verloren gegangene Paket enthalten, das mit Verzögerung empfangen wurde.

**14.** Sprachdecodierungsverfahren nach Anspruch 13, das ferner einen Schritt des Anforderns des erneuten Sendens des verloren gegangenen Pakets, falls in der Bestimmungseinrichtung festgestellt worden ist, dass es verloren gegangen ist, umfasst.

**15.** Sprachcodierungs-/Sprachdecodierungsverfahren, das die Verfahrensschritte nach Anspruch 14 umfasst und ferner umfasst:

einen Schritt des erneuten Sendens eines verloren gegangenen Pakets in Übereinstimmung mit einer Anforderung zum erneuten Senden des Pakets.

16. Sprachdecodierungsverfahren nach Anspruch 10, das ferner umfasst:

einen Schritt des Akkumulierens von zweiten Informationen in Bezug auf die zweite Filterungsverarbeitung; und einen Schritt des erneuten Berechnens eines Filterspeicherwerts, der für die zweite Filterungsverarbeitung zu verwenden ist, wenn der Empfang des verloren gegangenen Pakets erfasst wird, wobei diese zweiten Informationen verwendet werden, die vor jenen akkumuliert wurden, die das verloren gegangene Paket enthalten, das mit Verzögerung empfangen wurde.

17. Sprachdecodierungsverfahren nach Anspruch 16, das ferner einen Schritt des Anforderns eines erneuten Sendens des verloren gegangenen Pakets, falls in der Bestimmungseinrichtung festgestellt worden ist, dass es verloren gegangen ist, umfasst.

18. Sprachcodierungs-/Sprachdecodierungsverfahren, das die Verfahrensschritte nach Anspruch 17 umfasst und ferner umfasst:

einen Schritt des erneuten Sendens eines verloren gegangenen Pakets in Übereinstimmung mit einer Anforderung zum erneuten Senden des Pakets.

## Revendications

1. Dispositif de décodage vocal comportant des moyens (10) destinés à recevoir un paquet, des moyens (25) destinés à déterminer si ledit paquet a été perdu ou non, des moyens (50) destinés à conduire un premier traitement de filtrage en utilisant une période de hauteur de son décodée à partir dudit paquet reçu, et des moyens destinés à conduire un second traitement de filtrage en utilisant une enveloppe de spectre décodée à partir dudit paquet, ledit dispositif comprenant :

des moyens (30) destinés à détecter que le paquet qui a été déterminé comme étant perdu auxdits moyens de détermination est retardé et reçu,
des moyens (40) destinés à accumuler des informations relatives audit premier traitement de filtrage ; et
des moyens (60) destinés à recalculer une valeur de mémoire de filtre devant être utilisée pour ledit premier traitement de filtrage lorsque ladite réception dudit paquet perdu est détectée, en utilisant lesdites informations accumulées antérieurement, incluant ledit paquet perdu qui a été reçu avec retard.

2. Dispositif de décodage vocal selon la revendication 1, comprenant, en outre, des moyens destinés à requérir le renvoi du paquet qui a été perdu dans le cas où il a été déterminé comme étant perdu auxdits moyens de détermination.

3. Dispositif de décodage/codage de code vocal comprenant un dispositif de décodage vocal selon la revendication 2, comprenant, en outre :

des moyens destinés à renvoyer un paquet qui a été perdu, conformément à une requête de renvoi du paquet.

4. Dispositif de décodage vocal comportant des moyens (10) destinés à recevoir un paquet, des moyens (25) destinés à déterminer si ledit paquet a été perdu ou non et des moyens (65) destinés à conduire un traitement de filtrage en utilisant une enveloppe de spectre décodée à partir dudit paquet reçu, ledit dispositif comprenant :

des moyens (30) destinés à détecter que le paquet qui a été déterminé comme étant perdu auxdits moyens de détermination est retardé et reçu,
des moyens (45) destinés à accumuler des informations relatives audit traitement de filtrage ; et
des moyens (70) destinés à recalculer une valeur de mémoire de filtre devant être utilisée pour ledit traitement de filtrage lorsque ladite réception dudit paquet perdu est détectée, en utilisant lesdites informations accumulées antérieurement, incluant ledit paquet perdu qui a été reçu avec retard.

5. Dispositif de décodage vocal selon la revendication 4, comprenant, en outre, des moyens destinés à requérir le renvoi du paquet qui a été perdu dans le cas où il a été déterminé comme étant perdu auxdits moyens de détermination.

**6.** Dispositif de décodage/codage de code vocal comprenant un dispositif de décodage vocal selon la revendication 5, comprenant, en outre :

des moyens destinés à renvoyer un paquet qui a été perdu, conformément à une requête de renvoi du paquet.

**7.** Dispositif de décodage vocal selon la revendication 1, comprenant, en outre :

des moyens (45) destinés à accumuler des secondes informations relatives audit second traitement de filtrage ; des moyens (70) destinés à recalculer une valeur de mémoire de filtre devant être utilisée pour ledit second traitement de filtrage lorsque ladite réception dudit paquet perdu est détectée, en utilisant lesdites secondes informations accumulées antérieurement, incluant ledit paquet perdu qui a été reçu avec retard.

**8.** Dispositif de décodage vocal selon la revendication 7, comprenant, en outre, des moyens destinés à requérir le renvoi du paquet qui a été perdu dans le cas où il a été déterminé comme étant perdu auxdits moyens de détermination.

**9.** Dispositif de décodage/codage de code vocal comprenant un dispositif de décodage vocal selon la revendication 8, comprenant, en outre :

des moyens destinés à renvoyer un paquet qui a été perdu, conformément à une requête de renvoi du paquet.

**10.** Procédé de décodage vocal comportant une étape consistant à recevoir un paquet, une étape consistant à déterminer si ledit paquet a été perdu ou non, une étape consistant à conduire un premier traitement de filtrage en utilisant une période de hauteur de son décodée à partir dudit paquet reçu, et une étape consistant à conduire un second traitement de filtrage en utilisant une enveloppe de spectre décodée à partir dudit paquet, ledit procédé comprenant :

une étape consistant à détecter que le paquet qui a été déterminé comme étant perdu à ladite étape de détermination est retardé et reçu, une étape consistant à accumuler des informations relatives audit premier traitement de filtrage ; et une étape consistant à recalculer une valeur de mémoire de filtre devant être utilisée pour ledit premier traitement de filtrage lorsque ladite réception dudit paquet perdu est détectée, en utilisant lesdites informations accumulées antérieurement, incluant ledit paquet perdu qui a été reçu avec retard.

**11.** Procédé de décodage vocal selon la revendication 10, comprenant, en outre, une étape consistant à requérir le renvoi du paquet qui a été perdu dans le cas où il a été déterminé comme étant perdu auxdits moyens de détermination.

**12.** Procédé de codage/décodage vocal comprenant les étapes du procédé selon la revendication 11, comprenant, en outre :

une étape consistant à renvoyer un paquet qui a été perdu, conformément à une requête de renvoi dudit paquet.

**13.** Procédé de décodage vocal comportant une étape consistant à recevoir un paquet, une étape consistant à déterminer si ledit paquet a été perdu ou non et une étape consistant à conduire un traitement de filtrage en utilisant une enveloppe de spectre décodée à partir dudit paquet reçu, ledit procédé comprenant :

une étape consistant à détecter que le paquet qui a été déterminé comme étant perdu à ladite étape de détermination est retardé et reçu, une étape consistant à accumuler des informations relatives audit traitement de filtrage ; et une étape consistant à recalculer une valeur de mémoire de filtre devant être utilisée pour ledit traitement de filtrage lorsque ladite réception dudit paquet perdu est détectée, en utilisant lesdites informations accumulées antérieurement, incluant ledit paquet perdu qui a été reçu avec retard.

**14.** Procédé de décodage vocal selon la revendication 13, comprenant, en outre, une étape consistant à requérir le renvoi du paquet qui a été perdu dans le cas où il a été déterminé comme étant perdu auxdits moyens de détermination.

**15.** Procédé de codage/décodage vocal comprenant les étapes du procédé selon la revendication 14, comprenant, en outre :

une étape consistant à renvoyer un paquet qui a été perdu, conformément à une requête de renvoi dudit paquet.

**16.** Procédé de décodage vocal selon la revendication 10, comprenant, en outre :

une étape consistant à accumuler des secondes informations relatives audit second traitement de filtrage ;
une étape consistant à recalculer une valeur de mémoire de filtre devant être utilisée pour ledit second traitement de filtrage lorsque ladite réception dudit paquet perdu est détectée, en utilisant lesdites secondes informations accumulées antérieurement, incluant ledit paquet perdu qui a été reçu avec retard.

**17.** Procédé de décodage vocal selon la revendication 16, comprenant, en outre, une étape consistant à requérir le renvoi du paquet qui a été perdu dans le cas où il a été déterminé comme étant perdu auxdits moyens de détermination.

**18.** Procédé de codage/décodage vocal comprenant les étapes du procédé selon la revendication 17, comprenant, en outre :

une étape consistant à renvoyer un paquet qui a été perdu, conformément à une requête de renvoi dudit paquet.

FIG. 1

# FIG. 2

EP 1 241 664 B1

# FIG. 3

# FIG. 4

EP 1 241 664 B1

# FIG. 5

EP 1 241 664 B1

FIG. 6A

FIG. 6B

# FIG. 7
## PRIOR ART

# FIG. 8
# PRIOR ART

FRAME CIRCUIT

LP ANALYSIS CIRCUIT

LP COEFFICIENT ENCODING CIRCUIT

CODE COMBINATION CIRCUIT

PACKETING CIRCUIT

SUB-FRAME CIRCUIT

PITCH PERIOD CANDIDATE SELECTION CIRCUIT

EXCITATION SIGNAL ENCODING CIRCUIT

EXCITATION SIGNAL BUFFER CIRCUIT

EP 1 241 664 B1